# EUROPÄISCHE PATENTSCHRIFT

(11) **EP 2 729 679 B1**
(45) Veröffentlichungstag und Bekanntmachung des Hinweises auf die Patenterteilung: **01.05.2019**
(21) Anmeldenummer: 12729361.1
(22) Anmeldetag: 22.06.2012
(51) Int. Cl.: F01N 13/18

(54) **VERFAHREN ZUR HERSTELLUNG EINER ABGASANLAGE SOWIE ABGASANLAGE**
METHOD FOR PRODUCING AN EXHAUST GAS SYSTEM, AND EXHAUST GAS SYSTEM
PROCÉDÉ DESTINÉ À LA FABRICATION D'UN SYSTÈME D'ÉCHAPPEMENT AINSI QUE SYSTÈME D'ÉCHAPPEMENT

(30) Priorität: 06.07.2011 DE 102011106801
(43) Veröffentlichungstag der Anmeldung: 14.05.2014
(73) Patentinhaber: Faurecia Emissions Control Technologies, Germany GmbH, 86154 Augsburg (DE)
(72) Erfinder: BLUEML, Alfred, 86946 Issing (DE)
(74) Vertreter: Prinz & Partner mbB
(86) Internationale Anmeldenummer: PCT/EP2012/002651
(87) Internationale Veröffentlichungsnummer: WO 2013/004352

(56) Entgegenhaltungen:
- EP-A1- 2 075 432
- DE-A1-102005 022 512
- DE-A1-102005 044 810
- DE-U1- 8 632 790

## Beschreibung

Die Erfindung betrifft ein Verfahren zur Herstellung einer Abgasanlage, insbesondere für ein Kraftfahrzeug.

Abgasanlagen bestehen üblicherweise aus mehreren Bauteilen, beispielsweise Abgaskrümmer, Rohren, Gehäusen für Katalysatoren und/oder Filter, sowie Schalldämpfern. Bisher ist es üblich, die Abgas leitenden Bauteile miteinander zu verschweißen. Dies ist nachteilig, da ein Schweißroboter eine Schweißelektrode um den gesamten Umfang der miteinander zu verschweißenden Bauteile herumführen muss. Dies ist platz- und zeitaufwendig. Außerdem müssen die miteinander zu verschweißenden Bauteile eine bestimmte Mindestwandstärke haben, damit zuverlässig geschweißt werden kann. Diese Mindestwandstärke ist größer als die Wandstärke, die im Hinblick auf die eigentlichen Festigkeitsanforderungen notwendig wäre.

Aus der DE 10 2004 038 099 ist bekannt, dass die Bauteile einer Abgasanlage auch miteinander verlötet werden können.

In der gattungsgemäßen DE 10 2005 022 512 A1 ist ein Verfahren zur Herstellung einer eine Abgasbehandlungsvorrichtung, z.B. eines Katalysatorelements oder eines Partikelfilters, gezeigt. Ein Gehäusemantel und ein Einlass- oder ein Auslasstrichter werden ineinandergesteckt, und der Gehäusemantel wird auf den Querschnitt eines Abgasbehandlungseinsatzes und auf den Querschnitt des Trichters kalibriert. Anschließend wird der Trichter mit dem Gehäusemantel verlötet.

Die DE 10 2005 044 810 A1 beschreibt die Herstellung einer Baugruppe einer Abgasanlage, die zwei Substrate zur Abgasreinigung aufnimmt. Eines der die Substrate umgebenden Gehäuse wird an einem Ende auf den Querschnitt des anderen Gehäuses kalibriert, bevor die Gehäuse ineinandergesteckt und miteinander verlötet werden.

Die DE 86 32 790 U1 beschreibt, bei der Fertigung einer Abgasanlage für eine Schweißverbindung zwischen einem Balg und einem Rohr eine Schweißhülse an einer Seite in das Ende des Balgs einzuschieben und gleichzeitig mit einer einzigen Schweißnaht den Balg, die Schweißhülse und das Rohr zu verbinden. Vor Einsetzen des Rohres werden der Balg und die Schweißhülse zusammen auf den Außenquerschnitt des Rohrs kalibriert. Durch die Kalibrierung wird das Spiel zwischen Balgende und Schweißhülse so weit reduziert, dass Balg und Schweißhülse als Zwischenprodukt vorgefertigt werden können.

Die Aufgabe der Erfindung besteht darin, ein Verfahren zu schaffen, mit dem das an sich bekannte Verlöten von Bauteilen einer Abgasanlage vorteilhaft in die Praxis umgesetzt werden kann.

Zur Lösung dieser Aufgabe ist erfindungsgemäß ein Verfahren zur Herstellung einer Abgasanlage mit den in Anspruch 1 aufgeführten Schritten vorgesehen. Ausgangspunkt der Erfindung ist die Erkenntnis, dass ein vergleichsweise enger, möglichst konstanter Spalt zwischen den einander überlappenden Rohrabschnitten vorteilhaft ist, um eine gute Lotstelle auszubilden. Ein solcher enger Spalt kann auf vielfältige Weise erhalten werden. Beispielsweise ist es möglich, für die Herstellung der verschiedenen Rohrabschnitte sehr enge Toleranzen vorzugeben, so dass die Rohrabschnitte jeweils mit einer Übergangspassung ineinandergesteckt werden können. Dies führt allerdings zu recht hohen Herstellungskosten. Die Erfindung beruht auf der Erkenntnis, dass der zum Löten gewünschte enge Spalt mit sehr geringem Aufwand dadurch erhalten werden kann, dass die Rohrabschnitte an den Verbindungsstellen kalibriert werden, nachdem die Rohrabschnitte ineinandergesteckt wurden. Unter den Begriff "Rohrabschnitt" fallen dabei auch Muffen, die insbesondere gekrümmt ausgeführt sein können.

Der besondere Vorteil der erfindungsgemäßen Vorgehensweise liegt darin, dass das Ineinanderstecken der Rohre, aufgrund der Spielpassung, problemlos möglich ist. Es ist nicht nötig, beim Zusammenstecken der Rohre besonders hohe Kräfte aufzubringen oder gar eines der Rohre zu erwärmen, um aufgrund der sich ergebenden Wärmedehnung die Rohrabschnitte ineinanderstecken zu können. Insgesamt ergeben sich mit dem erfindungsgemäßen Verfahren besonders geringe Herstellungskosten.

Vorzugsweise ist vorgesehen, dass beim Kalibrieren ein Druck in radialer Richtung nach innen auf das außenliegende Rohr aufgebracht wird, sodass mindestens das außenliegende Rohr plastisch verformt wird. Diese Ausgestaltung beruht auf der Erkenntnis, dass beim plastischen Verformen an der Verbindungsstelle sich der gewünschte, enge Spalt allein durch die Rückfederung des außenliegenden Rohrabschnittes einstellt. Weitergehende Maßnahmen sind nicht erforderlich. Insbesondere ist es nicht erforderlich, die Größe des sich ergebenden Spalts zu überwachen, da das Lotmaterial aufgrund der wirkenden Kapillarkräfte etwaige Unterschiede und auch Exzentrizitäten von alleine ausgleicht.

Erfindungsgemäß wird die gesamte Abgasanlage zusammengesteckt, und alle Verbindungsstellen der Abgasanlage werden im Wesentlichen gleichzeitig kalibriert. Anders als bei geschweißten Abgasanlagen kann mit dem erfindungsgemäßen Verfahren die gesamte Abgasanlage "in einem Schritt" vormontiert und anschließend kalibriert werden. Hierfür ist ein horizontaler Montagetisch besonders geeignet.

Alle Verbindungsstellen der Abgasanlage werden erfindungsgemäß im Wesentlichen gleichzeitig verlötet. Dies führt zu einer großen Zeitersparnis bei der Herstellung der Abgasanlage. Weiterhin kann unabhängig vom jeweiligen Durchmesser die gleiche Prozesszeit für den Lötvorgang angesetzt werden.

Gemäß einer bevorzugten Ausführungsform der Erfindung ist vorgesehen, dass die Abgasanlage in horizontaler Ausrichtung verlötet wird. Dies beruht auf der Erkenntnis, dass aufgrund des Kalibrierens der Verbindungsstellen die auf das Lotmaterial wirkenden Kapillarkräfte groß genug sind, dieses auch bei horizontal ausgerichtetem Spalt gleichmäßig in diesen zu verteilen.

Vorzugsweise wurde vor dem Zusammenstecken an einem Ende eines Rohrabschnittes ein Lotmaterial aufgebracht. Dieses kann beispielsweise aufgedruckt sein, insbesondere im Siebdruckverfahren, so dass keine separaten Bauteile wie Lotringe, etc. gehandhabt werden müssen.

Vorzugsweise werden mehr als fünf unterschiedliche Rohrabschnitte verwendet, insbesondere mehr als zehn unterschiedliche Rohrabschnitte. Dies beruht auf der überraschenden Erkenntnis, dass der Gesamtherstellungsaufwand verringert werden kann, indem die Abgasanlage aus einer vergleichsweise hohen Anzahl von standardisierten Rohrabschnitten aufgebaut wird. Anders als bei einer geschweißten Abgasanlage, bei der jede Schweißnaht zu einem hohen Herstellungsaufwand und hohen Kosten führt und daher konstruktiv vermieden wird, wirken sich bei der erfindungsgemäßen Abgasanlage die einzelnen Verbindungsstellen nicht nachteilig aus, und zwar weder hinsichtlich der Festigkeit noch der Kosten. Stattdessen können dadurch Herstellungskosten gespart werden, dass die Abgasanlagen einer großen Anzahl unterschiedlicher Typen von Kraftfahrzeugen unter ausschließlicher Verwendung von ausgewählten Rohrabschnitten aus einem vorgegebenen Baukasten von Standard-Rohrabschnitten hergestellt werden. Diese Standard-Rohrabschnitte können dann in entsprechend hohen Stückzahlen vorproduziert werden, so dass sich trotz der höheren Anzahl an Verbindungsstellen Einsparungen ergeben. Hinzu kommt, dass diese Standard-Rohrabschnitte keine besonderen Anforderungen hinsichtlich der Toleranzen erfüllen müssen, da aufgrund des Kalibrierens nach dem Ineinanderstecken ein lötgerechter Spalt gewährleistet ist.

Die Erfindung wird nachfolgend anhand der beigefügten Zeichnungen beschrieben. In diesen zeigen:
- Figur 1 schematisch eine Abgasanlage während der Herstellung;
- Figur 2 schematisch einen Schnitt durch die Abgasanlage an einer Verbindungsstelle, die in einer Haltevorrichtung aufgenommen ist;
- Figur 3 schematisch das Detail III von Figur 1;
- Figur 4 schematisch im Schnitt eine Verbindungsstelle während des Kalibrierens; und
- Figur 5 schematisch im Schnitt eine Verbindungsstelle beim Verlöten.

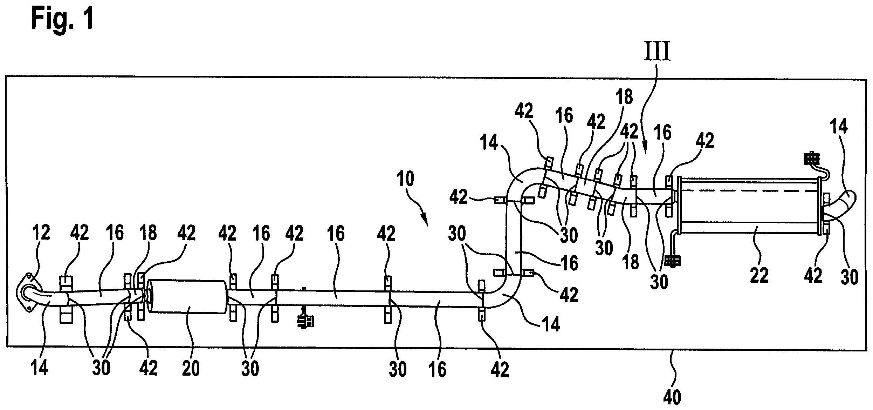

In Figur 1 ist schematisch eine Abgasanlage gezeigt, die einen Anschlussflansch 12 enthält, mehrere Rohrbögen 14, mehrere Rohrabschnitte 16, mehrere Muffen 18 sowie ein Katalysatorgehäuse 20 und einen Schalldämpfer 22. Bei den Rohrabschnitten 16 sowie den Rohrbögen 14 und den Muffen 18, die hier auch als "Rohrabschnitte" angesehen werden, handelt es sich um vorgefertigte Teile eines Baukastensystems, aus dem für den jeweiligen Fahrzeugtyp diejenigen Teile ausgewählt werden, mit denen der gewünschten Rohrverlauf, die gewünschten Abmessungen, etc. erhalten werden können. Alle Rohrabschnitte bestehen aus Blech, wobei Wandstärken im Bereich bis hinunter zu 0,6 mm möglich sind.

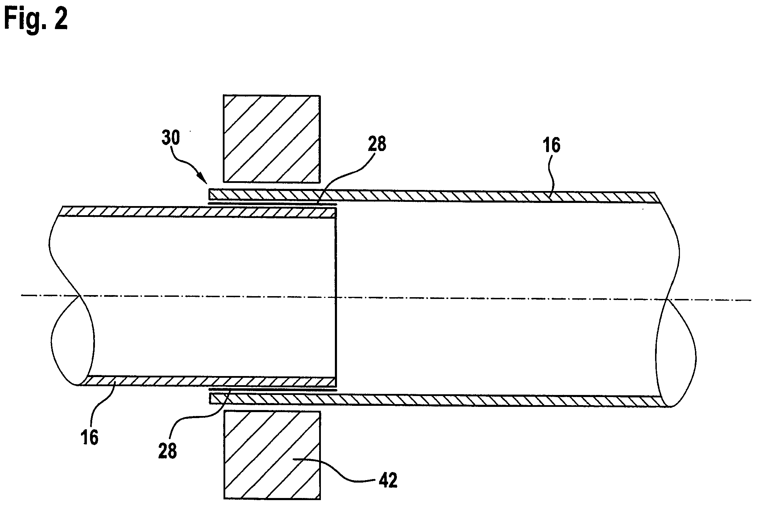

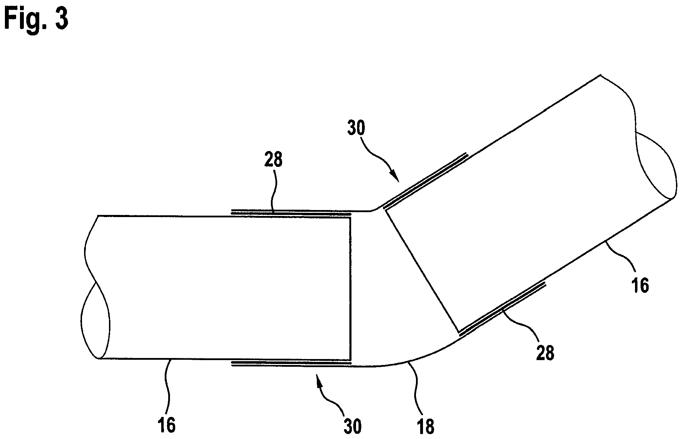

Die Rohrabschnitte sind jeweils ineinandergesteckt, so dass eine Vielzahl von Verbindungsstellen 30 gebildet ist (siehe auch die Figuren 2 und 3). Alle Rohrabschnitte sind dabei so dimensioniert, dass sie mit einer Spielpassung ineinandergesteckt werden können. Dies ermöglicht, die gesamte Abgasanlage mit geringem Aufwand auf einem Montagetisch 40 vorzumontieren, wobei jeder Verbindungsstelle eine Haltevorrichtung 42 zugeordnet ist. Die Aufgabe der Haltevorrichtung 42 besteht im ersten Schritt darin, die Rohrabschnitte geeignet zu fixieren.

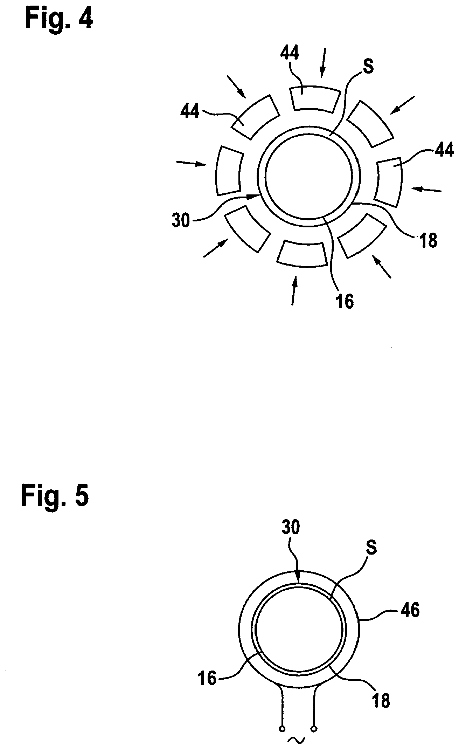

Wie in Figur 4 gezeigt ist, liegt bei der lose zusammengesteckten Abgasanlage, also im vormontierten Zustand, ein vergleichsweise großes Spiel S im Bereich einer Verbindungsstelle 30 vor (hier beispielhaft dargestellt für eine Verbindungsstelle zwischen einer Muffe 18 und einem Rohrabschnitt 16). Dieses Spiel S ermöglicht es, die Rohrabschnitte problemlos ineinanderzustecken, ohne dass sich die einzelnen Bauteile verklemmen oder größere Kräfte aufgewendet werden müssen.

Um die einzelnen Rohrabschnitte im Bereich der entsprechenden Verbindungsstellen 30 aneinander zu befestigen, wird die entsprechende Verbindungsstelle 30 zunächst kalibriert. Dies ist schematisch in Figur 4 dargestellt, in der mehrere Pressbacken 44 gezeigt sind, die einen radial nach innen wirkenden Druck auf den außenliegenden Rohrabschnitt, hier die Muffe 18, und damit indirekt auch auf den innenliegenden Rohrabschnitt ausüben. Die aufgebrachte Kraft ist so hoch, dass zumindest der außenliegende Rohrabschnitt plastisch verformt wird, also nach dem Kalibrieren einen geringeren Innendurchmesser hat als vorher. Dies gewährleistet, dass nach dem Kalibrieren ein vergleichsweise enger Spalt (siehe den kleineren Spalt S in Figur 5) vorliegt, der es ermöglicht, die Rohrabschnitte zuverlässig miteinander zu verlöten.

Die Pressbacken 44 können an der Haltevorrichtung angebracht oder in diese integriert sein. Beispielsweise kann jeder Haltevorrichtung eine Kalibrierzange zugeordnet sein, die sich um die Verbindungsstelle 30 schließt und dort den nötigen Druck aufbringt.

Zum Zwecke des Verlötens kann im Bereich der Verbindungsstelle ein Lotring aus einem Lotmaterial, insbesondere Hochtemperaturlotmaterial, angeordnet werden. Alternativ und bevorzugt ist vorgesehen, dass mindestens einer der Rohrabschnitte im Bereich der Verbindungsstelle mit einem Lotmaterial beschichtet ist, insbesondere mit einer aufgedruckten oder in ähnlicher Weise aufgebrachten Lotpaste (siehe das in den Figuren 2 und 3 schematisch angedeutete Lotmaterial 28). Zum Verlöten der Rohrabschnitte ist dann vorgesehen, dass nach dem Kalibrieren die Verbindungsstelle 30 erwärmt wird, insbesondere durch eine Induktionsvorrichtung 46 (siehe Figur 5), mit der die Verbindungsstelle 30 so erhitzt werden kann, dass das Lotmaterial aufschmilzt und die beiden Rohrabschnitte nach dem Abkühlen zuverlässig miteinander verbindet.

Auch die Induktionsvorrichtung 46 ist vorzugsweise in die Haltevorrichtung 42 integriert, so dass nach dem Aufspannen der Abgasanlage auf dem Montagetisch 40 automatisiert erst der Kalibrierschritt und dann der Lötschritt vorgenommen werden können, während die Abgasanlage auf dem Montagetisch fixiert bleibt.

Besonders vorteilhaft hinsichtlich der Produktivität ist es, dass die gesamte Abgasanlage horizontal vormontiert werden kann und außerdem alle Verbindungsstellen gleichzeitig verlötet werden können. Es ist dabei ohne Einfluss, dass je nach konkretem Typ der Abgasanlage eine sehr hohe Anzahl von Verbindungsstellen 30 vorhanden ist, insbesondere zehn oder mehr Verbindungsstellen.

## Patentansprüche

1. Verfahren zur Herstellung einer Abgasanlage (10) mit mehreren Rohrabschnitten (14, 16, 18) mittels der folgenden Schritte:
- die gesamte Abgasanlage (10) wird zusammengesteckt, wobei die Rohrabschnitte (14, 16, 18) mit einer Spielpassung ineinandergesteckt werden, so dass Verbindungsstellen (30) gebildet sind, an denen sich jeweils zwei Rohrabschnitte (14, 16, 18) überlappen;
- die Rohrabschnitte (14, 16, 18) werden an allen Verbindungsstellen (30) im Wesentlichen gleichzeitig kalibriert, so dass sich jeweils ein enger Spalt ergibt;
- alle Verbindungsstellen (30) der Abgasanlage (10) werden im Wesentlichen gleichzeitig verlötet.

2. Verfahren nach Anspruch 1, **dadurch gekennzeichnet, dass** beim Kalibrieren ein Druck in radialer Richtung nach innen auf das außenliegende Rohr aufgebracht wird, so dass mindestens das außenliegende Rohr plastisch verformt wird.

3. Verfahren nach einem der vorhergehenden Ansprüche, **dadurch gekennzeichnet, dass** die Abgasanlage (10) in horizontaler Ausrichtung verlötet wird.

4. Verfahren nach einem der vorhergehenden Ansprüche, **dadurch gekennzeichnet, dass** vor dem Zusammenstecken an einem Ende eines Rohrabschnitts (14, 16, 18) ein Lotmaterial (28) aufgebracht wurde.

5. Verfahren nach einem der vorhergehenden Ansprüche, **dadurch gekennzeichnet, dass** mehr als fünf unterschiedliche Rohrabschnitte (14, 16, 18) verwendet sind.

6. Verfahren nach Anspruch 5, **dadurch gekennzeichnet, dass** mehr als zehn unterschiedliche Rohrabschnitte (14, 16, 18) verwendet sind.

7. Verfahren nach einem der vorhergehenden Ansprüche, **dadurch gekennzeichnet, dass** als einer der Rohrabschnitte eine Muffe (18) verwendet wird.

8. Verfahren nach Anspruch 7, **dadurch gekennzeichnet, dass** gerade Rohrabschnitte (14) mit dazwischen angeordneten, gekrümmten Muffen (18) verwendet werden.

## Claims

1. A method of manufacturing an exhaust system (10) comprising a plurality of pipe sections (14, 16, 18) by means of the following steps:
- the entire exhaust system (10) is fitted together, the pipe sections (14, 16, 18) being fitted into each other with a clearance fit, so that connecting points (30) are formed, at which two respective pipe sections (14, 16, 18) overlap each other;
- the pipe sections (14, 16, 18) are calibrated at all connecting points (30) substantially at the same time, so that a respective narrow gap is obtained;
- all connecting points (30) of the exhaust system (10) are soldered substantially at the same time.

2. The method according to claim 1, **characterized in that** during calibrating, a pressure is applied to the outer pipe in the radial direction inwards, so that at least the outer pipe is plastically deformed.

3. The method according to either of the preceding claims, **characterized in that** the exhaust system (10) is soldered in horizontal orientation.

4. The method according to any of the preceding claims, **characterized in that** before fitting together, a solder material (28) has been applied at one end of a pipe section (14, 16, 18).

5. The method according to any of the preceding claims, **characterized in that** more than five different pipe sections (14, 16, 18) are used.

6. The method according to claim 5, **characterized in that** more than ten different pipe sections (14, 16, 18) are used.

7. The method according to any of the preceding claims, **characterized in that** a sleeve (18) is used as one of the pipe sections.

8. The method according to claim 7, **characterized in that** straight pipe sections (14) with curved sleeves (18) arranged in between are used.

## Revendications

1. Procédé de fabrication d'un système d'échappement (10) comprenant une pluralité de tronçons de tube (14, 16, 18) au moyen des étapes suivantes :
- l'ensemble du système d'échappement (10) est assemblé, les tronçons de tube (14, 16, 18) étant enfichés les uns dans les autres avec un ajustement avec jeu, de sorte que des points de raccordement (30) sont réalisés au niveau desquels deux tronçons de tube (14, 16, 18) respectifs se chevauchent ;
- les tronçons de tube (14, 16, 18) sont calibrés sensiblement en même temps au niveau de tous les points de raccordement (30) de sorte qu'une fente étroite respective est obtenue,
- tous les points de raccordement (30) du système d'échappement (10) sont brasés sensiblement en même temps.

2. Procédé selon la revendication 1, **caractérisé en ce que** lors du calibrage, une pression est appliquée sur le tube extérieur dans un sens radial vers l'intérieur, de sorte qu'au moins le tube extérieur est déformé plastiquement.

3. Procédé selon l'une des revendications précédentes, **caractérisé en ce que** le système d'échappement (10) est brasé selon une orientation horizontale.

4. Procédé selon l'une des revendications précédentes, **caractérisé en ce qu'**un matériau de brasage (28) a été appliqué à une extrémité d'un tronçon de tube (14, 16, 18) avant l'assemblage.

5. Procédé selon l'une des revendications précédentes, **caractérisé en ce que** plus de cinq tronçons de tube (14, 16, 18) différents sont utilisés.

6. Procédé selon la revendication 5, **caractérisé en ce que** plus de dix tronçons de tube (14, 16, 18) différents sont utilisés.

7. Procédé selon l'une des revendications précédentes, **caractérisé en ce qu'**un manchon (18) est utilisé en tant que l'un des tronçons de tube.

8. Procédé selon la revendication 7, **caractérisé en ce que** des tronçons de tube (14) droits avec des manchons (18) courbes agencés entre eux sont utilisés.
